# DEMANDE DE BREVET EUROPEEN

(11) **EP 2 339 775 A1**
(43) Date de publication de la demande: **29.06.2011**
(21) Numéro de dépôt: 10196208.2
(22) Date de dépôt: 21.12.2010
(51) Int. Cl.: H04L 9/08, H04L 29/06

(54) **Procédé et dispositif de chiffrement distribué basé sur un serveur de clés**

(30) Priorité: 22.12.2009 FR 0959417
(71) Demandeur: FRANCE TELECOM, 75015 Paris (FR)
(72) Inventeur: Zanolin, Gilles, 38320, Eybens (FR); Girard, Bruno, 38320, Eybens (FR); Bour, Frederic, 38190, Froges (FR)
(74) Mandataire: Bonnans, Arnaud

(57) **Abrégé**

Le procédé de chiffrement comporte :
- une étape (405) d'authentification d'un utilisateur d'une première application et
- en cas d'authentification, une étape (435) de fourniture à la première application d'une composante de clé de chiffrement de données à utiliser pour chiffrer des données, et d'un identifiant de composante de clé de chiffrement de données, à transmettre à une deuxième application, destinatrice des données chiffrées.

Pour le déchiffrement, on effectue :
- une étape d'authentification (460) d'un utilisateur de la deuxième application,
- en cas d'authentification, une étape de mise en correspondance de l'identifiant et de la composante de clé de chiffrement de données chiffrée et
- une étape d'envoi (485) à la deuxième application de la composante de clé de chiffrement de données.

## Description

La présente invention concerne un procédé et un dispositif de chiffrement distribué basé sur un serveur de clés. Elle s'applique, en particulier au chiffrement distribué, basé sur un serveur de clés, de données pour transmission sur un réseau de communication.

Pour sécuriser les échanges de courrier électroniques, les certificats de signature peuvent être embarqués sur une carte électronique à microcircuit, mais les certificats de chiffrement sont, la plupart du temps, créés à partir de secrets générés depuis le terminal de l'utilisateur puis installés sur ce terminal selon une procédure d'installation qui varie suivant les outils de messagerie utilisés. Ce type de procédé présente plusieurs inconvénients :
- il contraint fortement le travail en mobilité, puisqu'il faut emporter son terminal,
- il rend le système de chiffrement sensible à une panne du terminal,
- il pose le problème de conservation du secret (ou « clé privée ») puisqu'un tiers mal intentionné pourrait s'emparer de la clé privée qui réside dans le magasin de certificats du terminal et
- il nécessite d'appliquer des procédures d'installation qui peuvent varier selon les outils installés sur le terminal.

Ceci est source de rigidité et de complexité. La présente invention vise à remédier à ces inconvénients.

A cet effet, selon un premier aspect, la présente invention vise un procédé de chiffrement, mis en oeuvre par un serveur, au cours d'une session avec au moins un terminal distant, le procédé étant caractérisé en ce qu'il comporte :
- une étape d'authentification d'un utilisateur d'une première application exécutée par un dit terminal et
- en cas d'authentification, une étape de fourniture à ladite première application d'une composante de clé de chiffrement de données à utiliser pour chiffrer des données, et d'un identifiant de ladite composante de clé de chiffrement de données, à transmettre à une deuxième application, destinatrice des données chiffrées.

On note que la composante de clé de chiffrement de données peut être la clé de chiffrement de données dans son intégralité ou une composante que la première application combine avec une autre composante.

Grâce à la mise en oeuvre de la présente invention, on dispose d'un service de gestion de session de chiffrement dépositaire des clés de chiffrement/déchiffrement de données à utiliser pour chiffrer des données à transmettre et déchiffrer les données reçues chiffrées. Ce service sert de médiateur et de tiers de confiance aux applications ayant besoin de chiffrer leurs données. On s'affranchit ainsi de la présence de certificat de chiffrement sur le terminal.

Ce service de gestion de session de chiffrement est invocable au moyen d'un composant spécifique, par exemple une bibliothèque logicielle, déployée sur le terminal, invoquée par l'application ayant des données à transmettre et conçue pour communiquer avec le serveur mettant en oeuvre ce service. A titre d'exemple, une technologie de type « service Web » (« web service », selon la terminologie anglo-saxonne), c'est-à-dire reposant sur un ou des composants logiciels invocables à distance à travers un réseau IP local ou un réseau étendu comme Internet, est utilisable pour la mise en oeuvre de l'invention.

On note qu'une authentification forte et une authentification faible de l'utilisateur destinataire des données sont compatibles avec la mise en oeuvre du procédé objet de la présente invention, selon les exigences de sécurité formulées par l'utilisateur émetteur des données chiffrées.

Selon des caractéristiques particulières, le procédé selon l'invention comprend une étape de chiffrement de la composante de clé de chiffrement de données au moyen d'une clé de chiffrement de clé, mémorisée en association avec une identification de l'utilisateur de ladite deuxième application. Il s'agit typiquement d'une clé publique d'un certificat de chiffrement associé à cet utilisateur destinataire. Seule la composante de clé de chiffrement de données est transmise à travers le réseau, la clé associée à un utilisateur destinataire desdites données n'étant, elle, jamais transmise à travers le réseau.

Selon des caractéristiques particulières, le procédé selon l'invention comprend :
- une étape d'authentification d'un utilisateur de ladite deuxième application,
- en cas d'authentification, une étape de mise en correspondance de l'identifiant fourni par ladite deuxième application avec ladite composante de clé de chiffrement de données et
- une étape d'envoi à ladite deuxième application de la composante de clé de chiffrement de données pour déchiffrer les données chiffrées.

Grâce à ces dispositions, on dé-corrèle les flux de données chiffrées des flux de négociation et de transmission des clés. Ainsi, même si un tiers malveillant intercepte une clé, il ne peut rien en faire.

Selon des caractéristiques particulières, au cours de l'étape de mise en correspondance, l'identifiant est constitué de la composante de clé de chiffrement de données chiffrée et est déchiffré au moyen d'une clé de déchiffrement de clé mémorisée en association avec une identification de l'utilisateur de ladite deuxième application.

Selon des caractéristiques particulières, la composante de clé de chiffrement de données a une durée de vie limitée.

La composante de clé de chiffrement de données est notamment utilisable uniquement dans le cadre d'une session de communication, pour laquelle elle a été générée, visant à la transmission sécurisée desdites données. En ce sens, la clé de chiffrement des données est également appelée "clé de session".

Ainsi, pour chaque session, une clé de session, valable pour la session d'échange au cours de laquelle elle a été négociée, se substitue au certificat de chiffrement de l'utilisateur. Cette clé de session est chiffrée de telle sorte que seul un utilisateur destinataire peut la récupérer après s'être authentifié auprès du service implémentant la présente invention.

La composante de clé de chiffrement de données chiffrée est déchiffrée au moyen d'une clé, notamment une clé privée, associée à l'utilisateur de ladite deuxième application et mémorisée en association avec une identification de l'utilisateur de ladite deuxième application. Il s'agit typiquement de la clé privée d'un certificat de chiffrement associé à l'utilisateur de cette deuxième application.

Ainsi, seuls les utilisateurs destinataires authentifiés peuvent déchiffrer les données chiffrées, en utilisant la composante de clé de chiffrement de données, après transmission au serveur pour déchiffrement de cette clé. En effet, une composante de clé de chiffrement de données déchiffrée avec une clé de déchiffrement de clé qui ne serait pas associée au destinataire, ne serait pas la clé (privée) associée à la clé (publique) utilisée pour le chiffrement de la composante de clé de chiffrement de données et aboutirait à une composante de clé de chiffrement de données rendant impossible le déchiffrement des données (des données erronées, différentes des données transmises, seraient obtenues).

Selon des caractéristiques particulières, la composante de clé de chiffrement de données est générée aléatoirement.

Il est à noter que la transmission de clé(s) du serveur au terminal ou vice versa peut, dans toutes les variantes présentées ici, être effectuée via un protocole sécurisé (par exemple https, « hypertext transfert protocol secured »).

Selon des caractéristiques particulières, au cours de l'étape de génération de composante de clé de chiffrement de données, on sélectionne une composante de clé de chiffrement de données en fonction du type de média mis en oeuvre par le terminal. Ainsi, on peut gérer différents médias à sécuriser, par exemple messagerie électronique, téléphone, ..., et leur associer différents certificats de chiffrement. Ainsi, le certificat à utiliser dépend non seulement de l'identité de l'utilisateur mais, éventuellement, du média qu'il utilise.

Selon des caractéristiques particulières, au cours de l'étape de chiffrement, un serveur distant génère une composante de clé de chiffrement de données différente pour chaque utilisateur destinataire des données.

Selon un deuxième aspect, la présente invention vise un procédé de chiffrement, mis en oeuvre par un terminal, au cours d'une session avec un serveur distant, procédé qui comporte :
- une étape d'authentification de l'utilisateur d'une première application, exécutée par ledit terminal,
- une étape de réception d'une composante de clé de chiffrement de données et d'un identifiant de ladite composante de clé de chiffrement de données,
- une étape de chiffrement de données en mettant en oeuvre ladite composante de clé de chiffrement de données, par la première application et
- une étape de transmission à une deuxième application des données chiffrées et de l'identifiant de ladite composante de clé de chiffrement de données.

Selon des caractéristiques particulières, le procédé de chiffrement comporte une étape de génération d'une composante de clé client par la première application, une étape de combinaison de la composante de clé de chiffrement de données et de la composante de clé client pour fournir une clé de chiffrement composite et une étape de chiffrement des données à chiffrer avec la clé de chiffrement composite.

Cette variante est davantage sécurisée, en ce qu'elle évite de faire transiter la totalité de la clé de chiffrement de session en "clair" dans le flux utilisé lors de la négociation et la transmission des clés.

Dans cette variante, c'est le couple de clés (clé de session serveur chiffrée, clé de session client non chiffrée) que l'utilisateur émetteur remet au destinataire. Ainsi, même si un tiers intercepte le flux de données chiffré, il lui manque la clé de session serveur non chiffrée pour reconstituer la clé composite nécessaire au déchiffrement des données chiffrées.

Le destinataire obtient la clé de session serveur non chiffrée auprès du serveur après authentification auprès du service, et peut ainsi recomposer la clé de session composite. Dans ce dernier échange, l'utilisateur destinataire ne transmet pas la composante de la clé de session client. Il est donc impossible, pour un tiers, de retrouver la clé composite à partir du flux échangé entre le serveur et le terminal de l'utilisateur destinataire.

Selon des caractéristiques particulières, le terminal chiffre la clé de session client avec la clé publique de chiffrement du serveur, et transmet la clé de session client chiffrée au serveur. A réception, le serveur déchiffre la clé de session client chiffrée au moyen de la clé privée de chiffrement du serveur (qui est supposée être un bi-clé de chiffrement) puis mémorise la clé de session client déchiffrée en association avec la clé de session serveur.

Ce mécanisme permet au serveur de contrôler, à réception de la clé de session client et de la clé de session serveur chiffrée, que l'utilisateur destinataire dispose bien d'un couple de clés de session valide. A cet effet, la deuxième application retourne au serveur la clé de session client et la clé de session serveur chiffrée. Le serveur vérifie qu'il s'agit bien de la bonne composante de clé composite : par comparaison de la clé de session client fournie par la deuxième application avec la clé de session client mémorisée, en association avec la clé de session serveur obtenue par déchiffrement. En cas d'égalité, le serveur retourne à la deuxième application la clé de session serveur déchiffrée. La deuxième application génère ensuite la clé de session composite, en combinant la clé de session client non chiffrée avec la clé de session serveur déchiffrée, reçue du serveur. On suppose en effet que les clés de session utilisées dans l'invention sont des clés symétriques, utilisables à la fois pour le chiffrement et le déchiffrement.

Selon des caractéristiques particulières, au cours de l'étape de fourniture, la première application chiffre la composante client de la clé en mettant en oeuvre la composante de clé de chiffrement de données obtenue au cours de l'étape de réception et transmet la composante client de la clé chiffrée audit serveur.

Selon un troisième aspect, la présente invention vise un procédé de déchiffrement, mis en oeuvre par un terminal, au cours d'une session avec un serveur distant, procédé qui comporte :
- une étape de réception, par une application, de données chiffrées et d'un identifiant d'une composante de clé de chiffrement de données,
- une étape d'authentification de l'utilisateur de ladite application, exécutée par ledit terminal,
- une étape de transmission au serveur de l'identifiant de la composante de clé de chiffrement de données,
- une étape de réception de la part du serveur, d'une composante de clé de déchiffrement et
- une étape de déchiffrement des données chiffrées en mettant en oeuvre ladite composante de clé de déchiffrement.

Selon un quatrième aspect, la présente invention vise un serveur qui comporte :
- un moyen d'authentification d'un utilisateur d'une première application exécutée par un terminal distant et
- un moyen de fourniture, en cas d'authentification, à ladite première application, d'une composante de clé de chiffrement de données à utiliser pour chiffrer des données, et d'un identifiant de ladite composante de clé de chiffrement de données, à transmettre à une deuxième application, destinatrice des données chiffrées.

Selon un cinquième aspect, la présente invention vise un terminal de chiffrement comporte :
- un moyen d'authentification d'un utilisateur,
- un moyen de réception d'une composante de clé de chiffrement de données et d'un identifiant de ladite composante de clé de chiffrement de données,
- un moyen de chiffrement de données en mettant en oeuvre ladite composante de clé de chiffrement de données et
- un moyen de transmission des données chiffrées et de l'identifiant de ladite composante de clé de chiffrement de données.

Selon un sixième aspect, la présente invention vise un terminal de déchiffrement qui comporte :
- un moyen de réception de données chiffrées et d'un identifiant d'une composante de clé de chiffrement de données,
- un moyen d'authentification d'un utilisateur,
- un moyen de transmission à un serveur de l'identifiant de la composante de clé de chiffrement de données,
- un moyen de réception de la part du serveur, d'une composante de clé de déchiffrement et
- un moyen de déchiffrement des données chiffrées en mettant en oeuvre ladite composante de clé de déchiffrement.

Selon un septième aspect, la présente invention vise un programme d'ordinateur intégrable dans un système informatique, ledit programme contenant des instructions permettant la mise en oeuvre du procédé objet de la présente invention, tel que succinctement exposé ci-dessus.

Selon un huitième aspect, la présente invention vise un support d'informations lisibles par un ordinateur ou un microprocesseur, amovible ou non, conservant des instructions d'un programme informatique, caractérisé en ce qu'il permet la mise en oeuvre du procédé objet de la présente invention, tel que succinctement exposé ci-dessus.

Les avantages, buts et caractéristiques de ce dispositif, de ce programme d'ordinateur et de ce support d'information étant similaires à ceux du procédé objet de la présente invention, tel que succinctement exposé ci-dessus, ils ne sont pas rappelés ici.

D'autres avantages, buts et caractéristiques de la présente invention ressortiront de la description qui va suivre, faite, dans un but explicatif et nullement limitatif en regard des dessins annexés, dans lesquels :
- la figure 1 représente, schématiquement, des moyens mis en oeuvre dans un mode de réalisation particulier du procédé et du dispositif objets de la présente invention,
- la figure 2 représente, schématiquement, des messages transmis lors de la mise en oeuvre d'un mode de réalisation particulier du procédé et du dispositif objets de la présente invention pour constituer des données chiffrées,

- la figure 3 représente, schématiquement, d'autres messages transmis lors de la mise en oeuvre d'un mode de réalisation particulier du procédé et du dispositif objets de la présente invention pour accéder à des données chiffrées et
- les figures 4 et 5 représentent, sous forme d'un logigramme, des étapes mises en oeuvre dans un mode de réalisation particulier du procédé objet de la présente invention.

D'une manière générale, la présente invention permet de délocaliser l'accès au certificat de chiffrement de l'utilisateur, en environnement distribué. L'utilisateur d'un terminal local n'a plus besoin de disposer de son certificat de chiffrement en local, il suffit qu'il dispose d'un mode d'identification/authentification et d'invocation d'un service de chiffrement mis en oeuvre par un serveur distant. Ceci présuppose, dans des modes de réalisation préférentiels, l'inscription de l'utilisateur à un annuaire central associé au service de chiffrement délocalisé.

Pour implémenter le procédé objet de la présente invention, on utilise un service tiers avec ses interfaces applicatives externes, qui seront à invoquer par les applications ayant à émettre ou recevoir des données chiffrées. Adossé à un fournisseur d'identité, ce service est dépositaire des clés de chiffrement de l'utilisateur. Ce service sert de médiateur aux applications ayant besoin de chiffrer leurs données en distribuant des identifiants de clés de chiffrement de données (appelées « clés de session »), préférentiellement à durée limitée, ces identifiants étant les clés (ou des composantes de clés) de chiffrement de données chiffrées, par exemple avec la clé privée de chaque destinataire, dans les modes de réalisation illustrés.

On s'affranchit ainsi de la présence de certificat de chiffrement sur le terminal. L'application ayant besoin de chiffrer les données peut être localisée sur le terminal de l'utilisateur, ou bien encore sur un serveur distant opérant des services pour cet utilisateur (par exemple : un webmail).

Le serveur utilise et mémorise, en association avec un identifiant de chaque utilisateur enregistré, un couple de clés comprenant, d'une part, une première clé de chiffrement de données destinée à être utilisée pour le chiffrement d'une clé de session et, d'autre part, une deuxième clé, destinée à être utilisée pour le déchiffrement d'une clé de chiffrement de données chiffrée. Dans le cas d'utilisation de clés de chiffrement asymétriques, la première clé est une clé publique de chiffrement, tandis que la deuxième clé est une clé privée de chiffrement. De manière connue, l'ensemble comprenant le couple de clés et l'identité de l'utilisateur représente un certificat de chiffrement qui est produit par une autorité de certification.

Chaque certificat de chiffrement d'un utilisateur émetteur est hébergé par le serveur dans une partie « coffre fort » du service dépositaire. Un annuaire des utilisateurs permet d'identifier et d'authentifier les utilisateurs, de gérer leurs médias à sécuriser (adresses de courrier électronique, téléphone, ..) et de leur associer le(s) certificat(s) de chiffrement : dans des modes de réalisation, le certificat à utiliser est lié à l'identité de l'utilisateur (mode multimédias) et, éventuellement, à un de ses médias (mono média, typiquement une adresse de courrier électronique), selon la configuration de l'annuaire. L'utilisateur s'identifie de manière connue, par exemple par nom d'utilisateur (« logon ») et mot de passe.

Les certificats ou les clés de chiffrement de ces certificats ne transitent jamais sur le réseau. En effet, la seule clé transitant via le réseau est une clé de chiffrement de données, ou de session, valable pour la session d'échange au cours de laquelle elle a été négociée, et chiffrée de telle sorte que seuls les utilisateurs destinataires peuvent obtenir cette clé de chiffrement de données en clair et, avec elle, accéder aux données chiffrées de l'utilisateur émetteur.

On note que les authentifications forte et faible de l'utilisateur destinataire sont possibles, selon les exigences de sécurité demandées par l'utilisateur émetteur. L'authentification forte (par exemple par l'utilisation d'une clé de signature disponible sur une carte à microcircuit) nécessite une inscription préalable des utilisateurs destinataires dans l'annuaire associé au service de chiffrement. L'authentification faible peut éventuellement s'affranchir de cette inscription.

Dans toute la description, on utilise les termes bien connus de l'homme du métier de « clé publique » et « clé privée » mises en oeuvre dans le chiffrement asymétrique, par exemple conforme à l'infrastructure à clés publiques PKI (acronyme de « Public Key Infrastructure »).

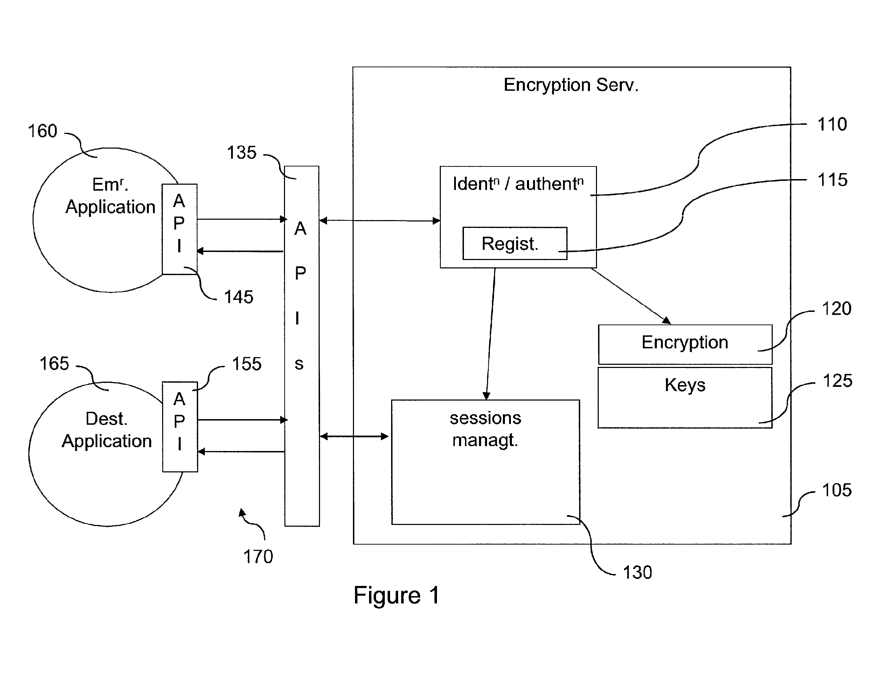

La figure 1 illustre l'architecture globale pour mettre en oeuvre un mode de réalisation du dispositif et du procédé objets de la présente invention. On observe, en figure 1, un serveur 105 hébergeant le service de gestion de session de chiffrement implémentant le procédé. Ce serveur 105 comporte des moyens d'identification/authentification 110 mettant en oeuvre un annuaire 115, des moyens de chiffrement 120, des moyens de stockage (coffre-fort) de clés de chiffrement 125 et des moyens de gestion de sessions (identifiant de session, IdSession, clé de session, SessionKey, validité et participants à la session) 130.

Des interfaces logicielles 135 sont mises en oeuvre par ce serveur 105 pour communiquer avec un service de messagerie d'utilisateur émetteur 160 muni d'une interface logicielle 145 et avec un service de messagerie d'utilisateur destinataire 165 muni d'une interface logicielle 155, par l'intermédiaire d'un réseau de communication 170.

Les interfaces logicielles 145 et 155 permettent l'invocation du service de chiffrement par les terminaux locaux 160 et 165 des utilisateurs émetteur et destinataire, respectivement. En figure 1, un seul utilisateur destinataire est représenté. Cependant, la présente invention ne se limite pas à ce nombre d'utilisateurs destinataires. De même, en figure 1, un seul serveur regroupe les différents moyens mis en oeuvre par le service de chiffrement pour le compte de plusieurs terminaux et de plusieurs applications hébergées sur ces terminaux. Cependant, dans des modes de réalisation, chacune des fonctions décrites est effectuée par au moins un serveur dédié, les communications entre les serveurs se faisant de manière sécurisée.

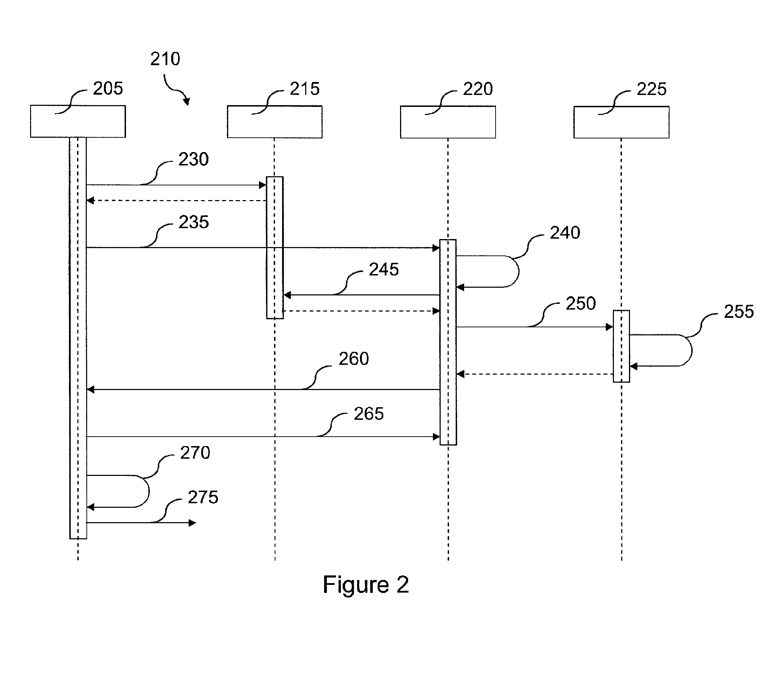

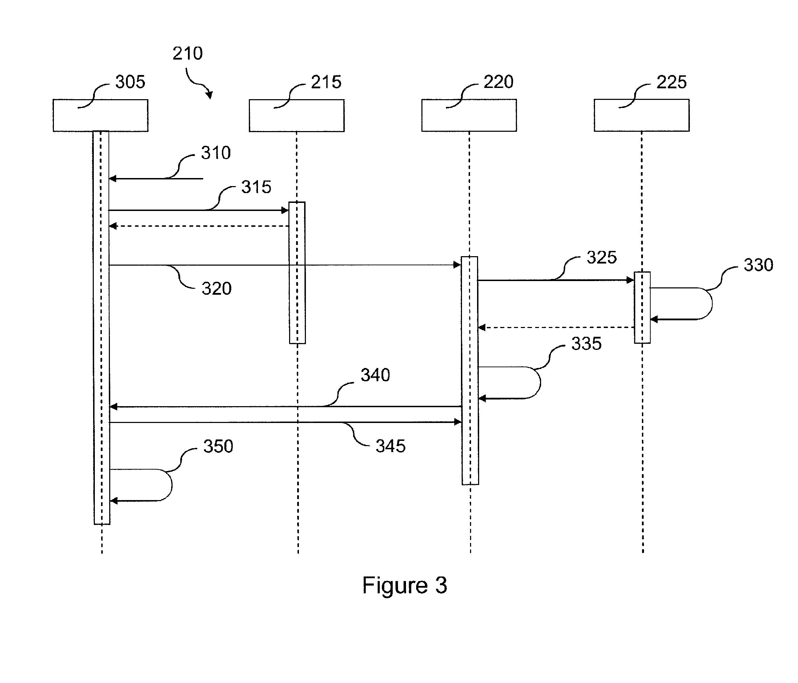

Le fonctionnement des moyens illustrés en figure 1 est détaillé en regard des figures 2 et 3. On observe, en haut en figure 2, une première application informatique 205 du terminal de l'utilisateur émetteur, un programme 215 implémentant un service d'identification et authentification, un programme 220 implémentant un service de gestion de clés de session et un programme 225 implémentant un service de chiffrement et de stockage. Un réseau de communication 210, par exemple Internet, permet les échanges de messages entre l'application 205 et le programme 215. Préférentiellement, ces échanges de messages se font de manière sécurisée, par exemple selon le protocole https.

Des lignes discontinues verticales symbolisent ces éléments, des rectangles verticaux représentant les périodes d'utilisation de ces éléments. On trouve, horizontalement, entre ces lignes discontinues, des flèches représentant les principales phases d'échanges de messages entre ces éléments, dans l'ordre, en partant du haut vers le bas.

Au cours d'une première phase 230, par l'intermédiaire de services de l'interface logicielle 135, l'application 205 accède au programme 215, et transmet au programme 215 des données d'identification et d'authentification de l'utilisateur. Au cours d'une phase 235, l'application 205 requiert la génération d'une clé de chiffrement de données, ou clé « de session » au programme 220, pour une liste d'adresses de destinataires. Les adresses de destinataires peuvent prendre la forme d'adresses de courrier électronique, de numéro de téléphone, ... Au cours de cette phase 235, l'application 205 établit les caractéristiques de sécurité de la transmission de ces données à chaque destinataire (authentification forte ou faible, mode vérification ou « optimiste » décrit plus loin, ...).

Au cours d'une phase 240, le programme 220 génère aléatoirement une clé de session, ici considérée comme symétrique, c'est-à-dire qui permet à la fois le chiffrement de données et le déchiffrement de données chiffrées avec cette clé. En variante, le programme 220 génère une clé de session pour chacun des destinataires. Au cours d'une phase 245, le programme 220 requiert du programme 215, les cordonnées des destinataires, les reçoit en retour. Au cours d'une phase 250, le programme 220 transmet la clé de session et les coordonnées des destinataires au programme 225. Au cours d'une phase 255, le programme 225 chiffre, pour chaque destinataire, la clé de session avec la clé publique de ce destinataire, ou clé de chiffrement de clé. Ainsi, seul ce destinataire pourra accéder à la clé de session avec sa clé privée, ou clé de déchiffrement de clé.

En variante, le programme 225 associe à la clé de chiffrement de données, un identifiant qui remplace, dans étapes suivantes illustrées en figures 2 et 3, la clé de chiffrement de données (ou « clé de session ») chiffrée.

Au cours dune phase 260, le programme 220 retourne à l'application 205 un ensemble ordonné de clés constitué de :
- la clé de session en clair et
- par destinataire, cette même clé de session chiffrée avec la clé publique du destinataire.

On note que, si le destinataire n'est pas reconnu dans l'annuaire, en mode vérification d'adresse (par défaut), la clé de session est à blanc. Par convention, une clé « à blanc » signifie que le système n'a pas pu chiffrer la clé de session pour ce destinataire. Le vecteur de clés renvoyé comporte donc autant de clés à blanc que de destinataires non reconnus dans l'annuaire. Pour chacune de ces clés à blanc, l'émetteur peut ensuite décider de la conduite à tenir :
- changer de mode, par exemple basculer en « mode optimiste », décrit plus loin, et créer dans l'annuaire une entrée temporaire pour ce destinataire,
- ne pas envoyer le message aux destinataires non reconnus ou
- ne pas envoyer le message tant qu'il existe un destinataire non reconnu.

Au cours d'une phase 265, l'application 205 retourne un accusé de réception au programme 220.

Au cours d'une phase 270, l'application 205 constitue un message pour chaque destinataire, avec le corps du message chiffré par la clé de session.

Au cours d'une phase 275, l'application transmet au destinataire, par exemple par courrier électronique, le message chiffré avec la clé de session, et y joint la clé de session chiffrée avec la clé publique du destinataire.

En variante, appelée « mode optimiste », l'entrée correspondant à un destinataire non présent dans l'annuaire est créée à la volée, avec une durée de validité configurable. Côté utilisateur destinataire, il s'agit alors d'un mode d'authentification avec sécurité faible, le destinataire ayant seulement à présenter son adresse de réception du message chiffré au service de chiffrement pour accéder au contenu du message chiffré. Ce mode optimiste permet de mettre en oeuvre facilement des échanges à la volée en dehors de communautés d'utilisateurs déjà établies.

La figure 3 reprend la structure de la figure 2 à ceci près que l'application 205 de l'utilisateur émetteur est remplacée par une deuxième application 305 d'un utilisateur destinataire.

Au cours d'une phase 310, l'application 305 du destinataire obtient la clé de session chiffrée. Au cours d'une phase 315, l'application 305 transmet au programme 215 des données d'identification et d'authentification de l'utilisateur de cette application, en utilisant les services de l'interface logicielle 135. Au cours d'une phase 320, l'application 305 transmet la clé de session chiffrée avec la clé publique de l'utilisateur destinataire au programme 220.

Au cours d'une phase 325, le programme 220 transmet au programme 225 la clé de session chiffrée et un identifiant du destinataire. Au cours d'une phase 330, la clé de session est déchiffrée par le programme 225 à partir de la clé de déchiffrement de clé, ici la clé privée du destinataire résidant dans le coffre fort, le lien entre le destinataire et sa clé privée étant effectué à partir de l'identifiant du destinataire.

En variante, au cours de l'étape 330, l'identifiant de la clé de chiffrement de données, reçu de l'application destinataire, est mis en correspondance avec la clé de déchiffrement, ici identique à la clé de chiffrement.

Au cours d'une phase 335, le programme 220 vérifie la validité de la clé de session, notamment que sa durée de vie n'a pas expiré. Au cours d'une phase 340, le programme 220 retourne la clé de session déchiffrée à l'application 305 du destinataire. Au cours d'une étape 345, l'application 305 envoie un accusé de réception de la clé de session au programme 220. Au cours d'une phase 350, l'application 305 déchiffre le message avec la clé de session.

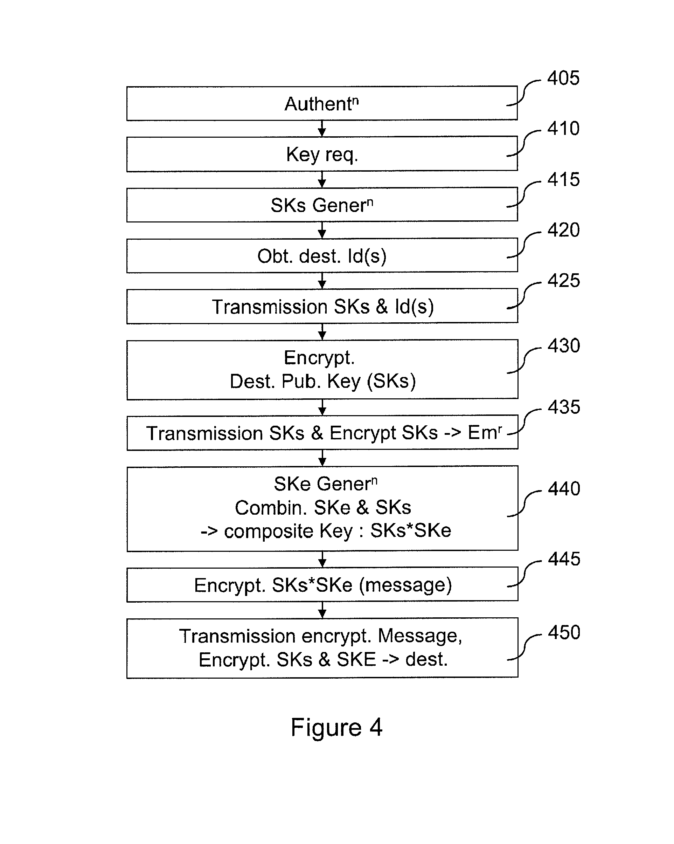

La figure 4 illustre des étapes réalisées dans une variante davantage sécurisée et plus complexe qui évite de faire transiter la clé de chiffrement de données « en clair » sur le réseau 210. Le principe de cette variante consiste à utiliser une clé de session composite comportant une composante générée côté serveur (notée « SKs ») et une composante générée côté client (notée « SKe »).

Au cours d'une première étape 405, par l'intermédiaire de services de l'interface logicielle 135, l'application 205 accède au programme 215, s'identifie et est authentifiée par le programme 215. Au cours d'une étape 410, l'application 205 requiert la génération d'une clé de session, ici une composante d'une clé de chiffrement de données, au programme 220, pour une liste d'adresses de destinataires des données à chiffrer. Les adresses de destinataires peuvent prendre la forme d'adresses de courrier électronique, de numéro de téléphone, ... Au cours de cette étape 410, l'application 205 établit les caractéristiques de sécurité de la transmission de ces données à chaque destinataire (authentification forte ou faible, mode vérification ou « optimiste », ...).

Au cours d'une étape 415, le programme 220 génère aléatoirement une composante, dite « serveur », SKs d'une clé symétrique de chiffrement de données composite.

Au cours d'une étape 420, le programme 220 requiert du programme 215, les cordonnées des destinataires, les reçoit en retour. Au cours d'une étape 425, le programme 220 transmet la composante serveur SKs de la clé de chiffrement de données composite et les coordonnées des destinataires au programme 225. Au cours d'une étape 430, le programme 225 chiffre, pour chaque destinataire, la composante serveur SKs de la clé de chiffrement de données composite, avec la clé de chiffrement de clé du destinataire, ici la clé publique de ce destinataire. Ainsi, seul ce destinataire pourra accéder à la composante serveur SKs de la clé de chiffrement de données composite avec sa clé privée.

En variante, au cours de l'étape 430, le programme 225 associe à la clé de chiffrement de données, un identifiant qui remplace, dans étapes suivantes illustrées en figures 2 et 3, la composante serveur chiffrée de la clé de chiffrement de données.

Au cours dune étape 435, le programme 220 retourne à l'application 205 un ensemble de clés constitué de :
- la composante serveur SKs de la clé de chiffrement de données composite, en clair et
- par destinataire, la composante serveur SKs de la clé de chiffrement de données composite, chiffrée avec la clé publique du destinataire.

Ainsi, si un tiers arrive à intercepter SKs, cette information n'est pas suffisante pour retrouver la clé de chiffrement composite car il manque la composante client SKe.

Au cours de l'étape 435, l'application 205 retourne un accusé de réception au programme 220. Au cours d'une étape 440, l'application 205 génère une composante client SKe de la clé de chiffrement de données composite et crée une composition des composantes de clé SKe et SKs pour former la clé de chiffrement de données composite notée « SKs*SKe ».

Cette opération de composition est, par exemple, une fonction simple qui permet de calculer rapidement une clé composite à partir des deux composantes de clés Ske et SKs : par exemple, une fonction "OU logique" ou encore une addition.

Au cours d'une étape 445, l'application 205 constitue un message pour chaque destinataire, avec le corps du message chiffré par la clé de chiffrement de données composite.

Au cours d'une étape 450, l'application transmet au destinataire, par exemple par courrier électronique :
- le message chiffré avec la clé de chiffrement de données composite SKs*SKe,
- la composante serveur SKs chiffrée avec la clé publique du destinataire et
- la composante client SKe de la clé de chiffrement de données composite.

On note que, si un tiers arrive à obtenir ces informations, il lui manquera la composante serveur SKs pour reconstituer la clé de chiffrement de données composite.

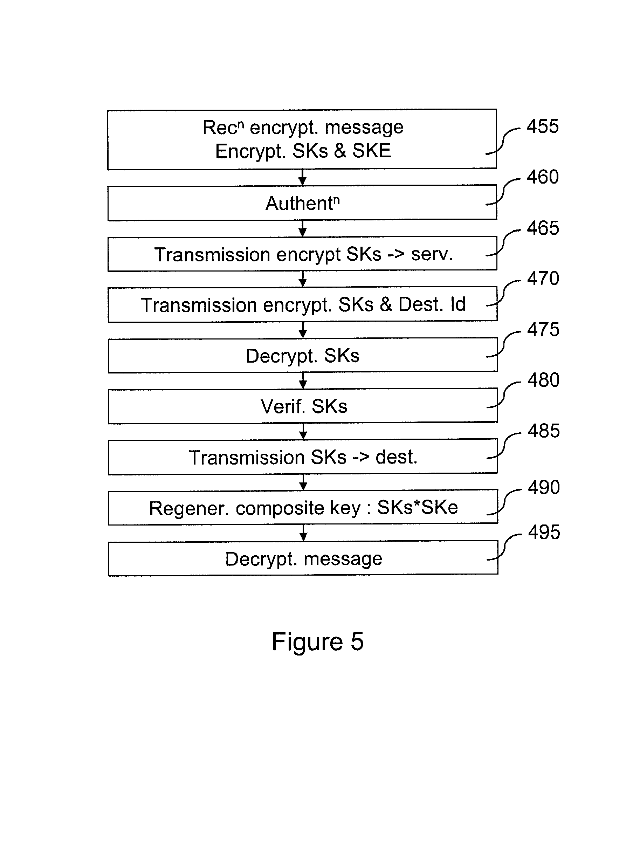

Au cours d'une étape 455 (figure 5), l'application 305 du destinataire récupère les éléments transmis, dont la composante serveur SKs chiffrée. Au cours d'une étape 460, l'application 305 envoie des données d'identification et d'authentification de l'utilisateur au programme 215, en utilisant les services de l'interface logicielle 135. Au cours d'une étape 465, l'application 305 transmet la composante serveur SKs de la clé de chiffrement de données composite chiffrée avec la clé publique de l'utilisateur destinataire au programme 220.

Au cours d'une étape 470, le programme 220 transmet au programme 225 la composante serveur SKs chiffrée et un identifiant du destinataire. Au cours d'une étape 475, la composante serveur SKs est déchiffrée par le programme 225 à partir de la clé de déchiffrement de clé du destinataire, ici la clé privée du destinataire résidant dans le coffre fort, le lien entre le destinataire et sa clé privée étant effectué à partir de l'identifiant du destinataire.

En variante, au cours de l'étape 475, l'identifiant de la clé de chiffrement de données reçu de l'application du destinataire est mis en correspondance avec la composante serveur de la clé de déchiffrement, ici identique à la clé de chiffrement.

Au cours d'une étape 480, le programme 220 vérifie la validité de la composante serveur SKs de la clé de chiffrement de données composite, notamment que sa durée de vie n'a pas expiré. Au cours d'une étape 485, le programme 220 retourne la composante serveur SKs déchiffrée de la clé de chiffrement de données composite à l'application 305 du destinataire. L'application 305 envoie, en retour, un accusé de réception de la composante serveur SKs au programme 220. Au cours d'une étape 490, l'application 305 recrée la clé de chiffrement de données composite SKs*SKe, en utilisant la même combinaison des composantes de clé SKe et SKs que l'application 205. Avec cette clé de chiffrement de données composite SKs*SKe, l'application 305 déchiffre le message au cours d'une étape 495.

On note que la composante client SKe n'est pas transmise par l'application 305. Il est donc impossible à un tiers de récupérer la composante client SKe à partir des échanges entre l'application 305 et le serveur de chiffrement.

En variante, pour éviter l'usurpation du message par un tiers tentant de se faire passer pour l'utilisateur émetteur, tiers qui récupérerait la composante serveur SKs envoyée par le programme 220 et simulerait une fausse valeur de la composante client SKe, on prévoit un mécanisme de protection supplémentaire. Ce mécanisme est basé sur le stockage, sur le serveur, de la composante client SKe générée par l'application 205. Cette composante client SKe est chiffrée par l'application 205 avec la clé publique de chiffrement du serveur qui aura été transmise par le programme 220 à l'application 205 lors de l'envoi des clés de session SKs. La composante client SKe chiffrée étant transmise au serveur, le serveur déchiffre la composante client SKe chiffrée au moyen de la clé privée de chiffrement du serveur afin d'obtenir la composante client SKe en clair puis enregistre la composante client SKe en association avec la composante serveur SKs.

Ce mécanisme permet au serveur de contrôler que le destinataire dispose bien d'un couple (SKs, SKe) valide. A cet effet, le destinataire renvoie au programme 220 la composante client SKe associée à la composante serveur SKs chiffrée et le programme 220 vérifie qu'il s'agit bien de la bonne valeur de la composante client SKe associée à la composante serveur SKs, avant de retourner la clé SKs déchiffrée.

En variante, le serveur qui déchiffre la clé de chiffrement ou composante de clé avec la clé (privée) de l'utilisateur compare cette clé/composante de clé déchiffrée avec la clé/composante de clé en clair qu'il a conservée en mémoire, et vérifie qu'il s'agit bien de la même clé/composante avant de transmettre la clé/composante déchiffrée.

En variante, l'utilisateur émetteur transmet au destinataire la composante client SKe chiffrée par la composante serveur SKs et, une fois que le destinataire a obtenu la composante serveur SKs déchiffrée, le destinataire déchiffre la composante client SKe avant de reconstituer la clé de session composite et de déchiffrer le message chiffré.

Dans les modes de réalisation illustrés dans les figures, le serveur de chiffrement fournit, au terminal de l'utilisateur émetteur, une clé de chiffrement de données chiffrée avec la clé publique de chaque destinataire.

Cependant, dans d'autres modes de réalisation, la clé de chiffrement fournie à l'émetteur n'est pas envoyée au destinataire avec les données chiffrées, et le destinataire récupère la clé de chiffrement auprès du serveur de chiffrement après s'être authentifié. Dans ces modes de réalisation, un identifiant de session, qui identifie la clé de chiffrement et la clé de déchiffrement, est transmis au cours des échanges entre les acteurs, depuis le serveur vers l'application de l'émetteur puis vers l'application du destinataire et enfin au serveur, afin que les destinataires récupèrent facilement auprès du serveur la clé de déchiffrement relative à la session.

On note que, dans les figures, cet identifiant est la clé de chiffrement de données chiffrée (figures 1 à 3) ou la composante serveur de la clé de chiffrement de données chiffrée (figures 4 et 5).

Plus généralement, l'identifiant de session, la clé de chiffrement de données chiffrée (figures 1 à 3) ou la composante serveur de la clé de chiffrement de données chiffrée (figures 4 et 5) est une information codée à partir de laquelle le serveur est en mesure de restituer une composante de clé de déchiffrement à transmettre à l'application du destinataire. Cette information codée est transmise depuis le serveur vers l'application de l'émetteur puis vers l'application du destinataire et enfin au serveur : grâce à cette information codée, un lien est établi via le serveur entre l'application de l'émetteur et l'application du destinataire, relativement à un envoi de données chiffrées.

En particulier, lorsque la composante de clé de chiffrement est générée aléatoirement, l'information codée change à chaque envoi de données chiffrées, ce qui assure que la seule connaissance des données d'authentification des utilisateurs respectifs de l'application de l'émetteur et de l'application du destinataire est insuffisante pour retrouver cette information codée.

Dans le mode de réalisation du procédé, illustré en figures 4 et 5, au niveau de l'administration du service, le service implémentant ce procédé met en oeuvre une fonction de génération de la clé publique et de la clé privée de chiffrement/déchiffrement de la composante serveur de la clé de chiffrement de données, une fonction de conservation de clés dans un annuaire de clés publiques et un coffre fort de clés privées.

Ce service met aussi en oeuvre des fonctions de « provisionning » (renseignement) des comptes utilisateur, qui ne sont pas rendues par l'interface logicielle 135, sauf cas du « mode optimiste », mais par les fonctions d'un serveur d'inscription « SI ».

Le service permet de gérer les certificats liés aux comptes selon deux modes :
- certificat généré par le service lui-même (mode auto-certifié)
- certificat produit par un service Tiers de Confiance, typiquement le GIP CPS (pour les professionnels de la santé) ou Verisign (marque déposée). Dans ce cas, il faut prévoir des mécanismes pour déléguer au client la demande de certification de sa clé publique par l'organisme Tiers de confiance.

Le service de chiffrement implémentant le procédé objet de la présente invention offre aux éditeurs partenaires la possibilité de s'appuyer sur une API générique de sécurisation des échanges. Il permet à un éditeur de logiciel souhaitant intégrer le mécanisme de chiffrer tout type de données avant de les transmettre à un tiers, en s'affranchissant de la présence de certificat de chiffrement sur le terminal.

## Revendications

1. Procédé de chiffrement, mis en oeuvre par un serveur (105, 215, 220, 225), au cours d'une session avec au moins un terminal distant, le procédé étant **caractérisé en ce qu'**il comporte :
- une étape (230, 405) d'authentification d'un utilisateur d'une première application (160) exécutée par un dit terminal et
- en cas d'authentification, une étape (260, 435) de fourniture à ladite première application d'une composante de clé de chiffrement de données à utiliser pour chiffrer des données, et d'un identifiant de ladite composante de clé de chiffrement de données, à transmettre à une deuxième application (165), destinatrice des données chiffrées.

2. Procédé selon la revendication 1, comprenant une étape (255, 430) de détermination dudit identifiant par chiffrement de la composante de clé de chiffrement de données au moyen d'une clé de chiffrement de clé, mémorisée en association avec une identification de l'utilisateur de ladite deuxième application (165).

3. Procédé selon l'une des revendications 1 ou 2, comprenant :
- une étape d'authentification (315, 460) d'un utilisateur de ladite deuxième application (165),
- en cas d'authentification, une étape de mise en correspondance (330, 475) de l'identifiant fourni par ladite deuxième application avec ladite composante de clé de chiffrement de données et
- une étape d'envoi (485) à ladite deuxième application de la composante de clé de chiffrement de données pour déchiffrer les données chiffrées.

4. Procédé selon la revendication 3, dans lequel, au cours de l'étape (330, 475) de mise en correspondance, l'identifiant est constitué de la composante de clé de chiffrement de données chiffrée et est déchiffré au moyen d'une clé de déchiffrement de clé mémorisée en association avec une identification de l'utilisateur de ladite deuxième application (165).

5. Procédé de chiffrement selon l'une des revendications 1 à 4, dans lequel la composante de clé de chiffrement de données a une durée de vie limitée.

6. Procédé selon l'une des revendications 1 à 5, dans lequel la composante de clé de chiffrement de données est générée aléatoirement.

7. Procédé de chiffrement, mis en oeuvre par un terminal, au cours d'une session avec un serveur (105, 215, 220, 225) distant, le procédé étant **caractérisé en ce qu'**il comporte :
- une étape (230, 405) d'authentification de l'utilisateur d'une première application (160), exécutée par ledit terminal,
- une étape (260, 435) de réception d'une composante de clé de chiffrement de données et d'un identifiant de ladite composante de clé de chiffrement de données,
- une étape (445) de chiffrement de données en mettant en oeuvre ladite composante de clé de chiffrement de données, par la première application et
- une étape (450) de transmission à une deuxième application (165) des données chiffrées et dudit identifiant de composante de clé de chiffrement de données.

8. Procédé de chiffrement selon la revendication 7, qui comporte une étape (440) de génération d'une composante de clé client (Ske) par la première application (160), une étape (440) de combinaison de la composante de clé de chiffrement de données (SKs) et de la composante de clé client pour fournir une clé de chiffrement composite (SKs*Ske) et une étape (445) de chiffrement des données à chiffrer avec la clé de chiffrement composite.

9. Procédé de chiffrement selon la revendication 8, dans lequel, au cours de l'étape (450) de fourniture, la première application (160) chiffre la composante client de la clé (Ske) avec la composante de clé de chiffrement de données (SKs) obtenue au cours de l'étape (260, 435) de réception et transmet la composante client de la clé chiffrée audit serveur (105, 215, 220, 225).

10. Procédé de déchiffrement, mis en oeuvre par un terminal, au cours d'une session avec un serveur (105, 215, 220, 225) distant, le procédé étant **caractérisé en ce qu'**il comporte :
- une étape (310, 455) de réception, par une application (165), de données chiffrées et d'un identifiant de composante de clé de chiffrement de données,
- une étape (315, 460) d'authentification de l'utilisateur de ladite application, exécutée par ledit terminal,
- une étape (320, 465) de transmission au serveur de l'identifiant de la composante de clé de chiffrement de données,
- une étape (340, 485) de réception de la part du serveur, d'une composante de clé de déchiffrement et
- une étape (350, 495) de déchiffrement des données chiffrées en mettant en oeuvre ladite composante de clé de déchiffrement.

11. Serveur (105, 215, 220, 225) **caractérisé en ce qu'**il comporte :
- un moyen (215) d'authentification d'un utilisateur d'une première application exécutée par un terminal distant et
- un moyen (220, 225) de fourniture, en cas d'authentification, à ladite première application d'une composante de clé de chiffrement de données à utiliser pour chiffrer des données, et d'un identifiant de ladite composante de clé de chiffrement de données, à transmettre à une deuxième application, destinatrice des données chiffrées.

12. Terminal de chiffrement, **caractérisé en ce qu'**il comporte :
- un moyen (145, 160) d'authentification d'un utilisateur,
- un moyen (145, 160) de réception d'une composante de clé de chiffrement de données et d'un identifiant de ladite composante de clé de chiffrement de données,
- un moyen (145, 160) de chiffrement de données en mettant en oeuvre ladite composante de clé de chiffrement de données et
- un moyen (145, 160) de transmission des données chiffrées et de l'identifiant de ladite composante de clé de chiffrement de données.

13. Terminal de déchiffrement, **caractérisé en ce qu'**il comporte :
- un moyen (155, 165) de réception de données chiffrées et d'un identifiant de composante de clé de chiffrement de données,
- un moyen (155, 165) d'authentification d'un utilisateur,
- un moyen (155, 165) de transmission à un serveur de l'identifiant de composante de clé de chiffrement de données,
- un moyen (155, 165) de réception de la part du serveur, d'une composante de clé de déchiffrement et
- un moyen (155, 165) de déchiffrement des données chiffrées en mettant en oeuvre ladite composante de clé de déchiffrement.

14. Programme d'ordinateur chargeable dans un système informatique, ledit programme contenant des instructions permettant la mise en oeuvre d'un procédé selon l'une quelconque des revendications 1 à 10.
